# EUROPEAN PATENT APPLICATION

(11) **EP 2 466 889 A2**
(43) Date of publication of application: **20.06.2012**
(21) Application number: 11191937.9
(22) Date of filing: 05.12.2011
(51) Int. Cl.: H04N 7/18

(54) **Multi-camera system for an automobile, automobile and method for operating a multi-camera system in an automobile**

(30) Priority: 18.12.2010 DE 102010055156
(71) Applicant: Valeo Schalter und Sensoren GmbH, 74321 Bietigheim-Bissingen (DE); Connaught Electronics Ltd., Tuam, County Galway (IE)
(72) Inventor: Denny, Patrick Eoghan, Roscam, County Galway (IE); Meyer, Thorsten, 74321 Bietigheim-Bissingen (DE)

(57) **Abstract**

The invention relates to a multi-camera system (2) for an automobile (1), including at least two cameras (5a to 5e) each for acquiring image data (13), which represents a time sequence of frames (17) from an environmental region of the automobile (1), a common computing means (4) for processing the image data (13) and for producing an image representation from the image data (13) of at least one of the cameras (5a to 5e), and a display means (3) for displaying the produced image representation, wherein the computing means (4) is configured, depending on the image representation to be produced, to output control commands (16) to the at least two cameras (5a to 5e), on the basis of which the at least two cameras (5a to 5e) transmit to the computing means (4) only a portion of the acquired image data (13) predetermined through the control commands (16).

## Description

The invention relates to a multi-camera system for an automobile. The multi-camera system includes at least two cameras, which are each designed to acquire image data representing a time sequence of frames (single images) of an environmental region of the automobile, In addition, the multi-camera system includes a common or central computing means processing the image data of the at least two cameras and generating an image representation from the image data of at least one of the cameras. A display means displays the generated image representation. The invention additionally relates to an automobile with such a multi-camera system as well as to a method for operating a multi-camera system in an automobile.

Thus, the interest is presently directed to a camera system with plural cameras, by means of which an environmental region of the automobile is detected, namely in particular the entire environment around the automobile. Such multi-camera systems are already prior art. A central computing means receives the image data of all of the cameras and is able to produce a common image representation from this image data, which can then be displayed on a display means - like on a display. Thus, this image representation is based on the image data of plural cameras. Such an image representation can for example show the automobile as well as its environment from a bird's eye perspective-the image representation is then a so-called "bird view". However, the computing means can only use the image of a single camera and for example display a region behind the automobile on the display (so-called "rear view"). The image of a camera acquiring the region behind the automobile is usually displayed after engaging the reverse gear. Thus, in principle, an image representation can be displayed on the display means, which is either based on the image data of a single camera or on the image data of a plurality of cameras,

A multi-camera system is for example known from the document US 2006/0139488 A1.

The printed matters US 7,450,165 B2 as well as US 2007/0229680 A1 each describe a camera system including a single camera. The camera transmits acquired image data to a base station, which includes a signal processor as well as a display. The signal processor can output control commands to the camera, which cause the camera to transmit only a predetermined region or an image window from an acquired overall image to the signal processor. In order to reduce the bandwidth required for the data transmission to a minimum, the resolution of the transmitted image region can be adjusted depending on its size. Zooming within an overall image as well as adjustment of the resolution of the selected image region is therein effected by means of an infernal controller of the camera. Therein, this camera system is used in an airplane.

In contrast to a camera system with only a single camera, the data transmission in a multi-camera system is not quite unproblematic: Today's digital cameras usually have a relatively high resolution such that accordingly a relatively large amount of data is produced. The video cameras for automobiles usually produce digital or else analog image data, which is transmitted in a continuous data stream to the computing means through a communication line. Usually, the following two standards are possible for the data transmission: LVDS (low voltage differential signaling) or else NTSC (national television systems committee). In case of the LVDS standard, a persistent uninterruptible continuous data stream of uncompressed image data (BT.656 YcbCr 4:2:2) is transmitted to the computing means through an electrical line. However, in case of the NTSC standard, an analog signal is sent, however, which is also an uninterruptible continuous video data stream. Exactly for this reason, separate transmission channels or separate communication lines have to be employed, namely a separate transmission channel for each camera. This means that each camera has to be coupled to the computing means through each one separate electrical line, in order that the transmission is ensured. Thus, mutti-camera systems are relatively costly and very expensive; in particular in case of the LVDS standard, the communication lines are expensive and costly.

It is an object of the invention to provide a multi-camera system for an automobile, which is improved with respect to the prior art.

According to the invention, this object is solved by a multi-camera system having the features of claim 1, as well as by a method having the features according to claim 15. Advantageous embodiments of the invention are the object of the dependent claims and of the description.

A multi-camera system for an automobile - according to the present invention - includes at least two cameras (video cameras) each for acquiring image data. The image data represent a time sequence of frames or a sequence of chronologically successively acquired frames of an environmental region of the automobile. In addition, the multi-camera system includes a common or central computing means processing the image data of the at least two cameras. The computing means can produce an image representation from the image data of at least one of the cameras, which can be displayed by means of a display means - like on a display. According to the invention, it is provided that depending on the image representation to be displayed the computing means can output control commands to the at least two cameras, as a result of which the at least two cameras transmit merely a portion, i.e. a subset of the entire acquired image data, namely a portion of image data predetermined by the control commands.

In other words, a central idea of the present invention consists in that each camera can transmit merely a data portion of the own image data to the computing means, namely that portion of the image data which is determined by the computing means in dependency on the actual image representation on the display means. As "portions of the image data", presently, both temporal portions of the image date - i.e. different frames within a time sequence of frames - and image portions within a frame are possible, like certain regions of a frame. Additionally or alternatively, the term "portions of the image data" also incorporates certain information or features of a frame, namely for example certain color information and/or contour information and/or contrast information and the like. The invention has various advantages: by reducing the quantity of the transmitted image data, the required bandwidth in the transmission of the image data can be reduced to a minimum. Thus, for example, a transmission of the image data of plural cameras can be allowed through a common single data line or a common data transmission channel. This can for example be configured such that the multi-camera system has a standardized - in particular packet-oriented - data transmission system (for example an Ethernet system), through which the at least two cameras can transmit their image data to the common computing means according to a standardized communication protocol. In such a data transmission system, expensive LVDS data lines can be omitted, and one - or plural - common data line can for example be used, which couples the computing means to the at least two cameras, optionally also through a router and/or a network bridge. Therefore, the principal advantage of the invention is in that the acquired videos of the cameras do not have to be transmitted in full quality or in the acquired resolution to the computing means. For each camera, thus, a bandwidth reduced with respect to the prior art is required. Namely, it is not always required to transmit the acquired images with full resolution or in full size to the computing means. Namely, it can occur that only a small region of the vehicle environment is displayed on the display means; in this case, only a certain region of the frames is required, while other regions can be transmitted with an inferior resolution or can even be omitted. This is for example the case in the so-called "vehicle terrain assistant", in which only of very small region of the frames of the videos is required to determine an actual velocity of the automobile with respect to the earth's surface in the terrain. The invention in addition has the advantage that the probability of a data collision can be reduced to a minimum. Not least, electrical energy can be saved in the automobile by the approach according to the invention; because less image data has to be transmitted to the computing means in total, and the effort concerning the data processing is also reduced.

The at least two cameras can for example include CCD cameras (charge-coupled-device) and/or CMOS cameras (complementary metal oxide semiconductor). In total, plural cameras can be employed, which can acquire the entire environment around the automobile - thus a 360° image. A camera can be placed on a left lateral flank and/or a camera can be placed on a left exterior mirror and/or a camera can be placed on a right lateral flank and/or a camera can be placed on a right exterior mirror and/or a camera can be placed on a front bumper and/or a camera can be placed on a rear bumper and/or a camera can be placed behind the windshield of the automobile.

Thus, each camera can transmit merely a predetermined portion or a predetermined subset of the entire image data to the computing means. As already explained, by the term "portions of the image data", both temporal portions of the sequence of frames - i.e. individual images within the time sequence - and spatial image portions or image regions within a single frame are understood. It is envisaged in one embodiment that the portion of image data is a subregion of a frame, in particular with a resolution predetermined by the control commands, This means that each camera can transmit as a portion of the image data a first subregion of acquired frame which is predetermined by the control commands with a predetermined resolution to the computing means - namely in dependency on the actually displayed image representation -, whilst the image data relating to the remaining region of the frame cannot be transmitted at all or only with a lower resolution. In this embodiment, for the time sequence of frames, exclusively the same subregion of all frames of this sequence can be transmitted with a predetermined resolution. For instance, the computing means can transmit control commands to the cameras, through which the desired subregion of a frame is determined. In this process, by the different cameras different subregions of respective frame can be transmitted to the computing means, whilst it is also possible that by at least one camera no image data are transmitted at a certain point in time. The computing means for instance can merely request the portion of frames in high quality which corresponds to the displayed image representation or is used for the generation of this image representation. The remaining portion of the frames can in this case be transmitted with lower resolution or not be transmitted at all. This embodiment proves particularly advantageous in particular in such situations, in which only a small region of the vehicle environment is to be represented on the display means. However, this embodiment is also particularly advantageous if the computing means performs horizon recognition in the image data and only the relevant region without the sky is to be displayed on the display means.

This means that merely a subregion of the acquired frame with a predetermined resolution can be transmitted to the computing means. This contains in particular two different cases: First, the cameras, whilst dispensing with the remaining, irrelevant portion of the frame can transmit to the computing means exclusively the desired subregion of the frame predetermined through the control commands. Then the required bandwidth is reduced to a minimum, because for the remaining region of the frame no data need to be transmitted at all. Second, it may be provided that the cameras can replace individual pixels of the remaining, irrelevant region of the frame by predetermined pixels and can transmit the relevant subregion together with the remaining region that has been replaced by predetermined pixels to the computing means, This may for instance be in the form that all pixels of the remaining region of the frame are replaced by the predetermined pixels. Namely, the pixels of the remaining region can be replaced by such pixels that - possibly after a data compression - require least storage space or the smallest bandwidth for transmission, It has proven to be particularly advantageous, if the pixels of the remaining region are replaced by grey pixels; because exactly then the amount of data required for the remaining second region of the frame is least. Such a frame - and in particular an overall sequence of such frames - the first (relevant) region of which has the full resolution and the second (irrelevant) region of which is replaced with predetermined constant pixels, can then be subjected to data compression, and the compressed image data can be transmitted to the computing means. In case of an MJPEG compression as well as in case of the YUV color model with a sampling rate of 8 bits per sample in the region of x00 to x0ff, the irrelevant pixels can for example be replaced with x80. Therein, the replacement of the irrelevant pixels with predetermined pixels has the advantage that the computing means receives the frames in their total sizes or each in the same dimension and thus the processing of the received frames can be effected without much effort. The computing means can simply cut out the second, irrelevant region of the frames and process and display the relevant, first region on the display means. Additionally or alternatively, the portion of the image predetermined by the control commands of the computing means may be a subregion of the frame or else a full frame with a lower resolution than that of the cameras - i.e. the original resolution of the image. This resolution of the subregion or else the full frame can be predetermined by the control commands of the computing means. This means that the computing means, in dependency on the image representation to be produced, can output control commands to the cameras by which the resolution of the transmitted frames or of a subregion of the frame is predetermined and reduced with respect to the original resolution. This embodiment proves to be advantageous in particular for the so-called "Bird View": In order to generate an image representation of the surroundings of the vehicle from a bird's perspective, the computing means requires the frames from several cameras, As, however, these frames are processed into a combined perspective image representation, these frames need not be transmitted with full resolution. This means that the required bandwidth can be reduced to a minimum.

As already explained, the portions of the image data cannot only relate to the image portions of a frame, but also be considered in the time domain or relate to the frames within the time sequence of frames. Namely, in an embodiment, it is provided that the portion of the image data is at least one frame or its subregion from said time sequence of frames. Thus, the cameras can transmit as a portion of the image data to the computing means at least one subregion of a frame from the time sequence of frames with a higher resolution than a corresponding subregion of a chronologically adjacent frame of this sequence. This embodiment then proves particularly advantageous if a frame acquired at a certain time is to be displayed for a longer period of time on the display means instead of a video. The further frames following this frame can then be transmitted to the computing means either with lower resolution or else not at all. For example, an entire frame of a sequence can be transmitted with an increased resolution with respect to the other frames; it can also be provided that only a single frame is transmitted, while the temporally adjacent frames or all of the other frames of the sequence are not transmitted at all. In this case, instead of a video, the frame acquired at a certain time can be displayed. It can also be provided that a certain time sequence of frames is transmitted to the computing means as a video with another quality - namely with another resolution - than a succeeding and/or a preceding time sequence of frames. For example, a time sequence of frames can be transmitted with a relatively low resolution in order to then display only a relatively small image representation on the display means - namely, a high resolution is not required for such a small image representation. The computing means can also transmit control commands to the cameras such that the resolution of the transmitted frames is increased for a certain sequence of frames. In this manner, the redundancy of the image data can be increased in functionalities relevant to safety in order to reduce the error rate to a minimum.

As portions of the image data, certain features of a frame can also be transmitted with improved quality with respect to other features to the computing means. For example, the cameras can transmit predetermined color information at least of an acquired frame - in particular of a time sequence of frames - with a better quality than other color information to the computing means. For example, the red channel can be transmitted with better quality than the green channel, or the red channel can be exclusively transmitted to the computing means. In this case, too, the required bandwidth can be reduced to a minimum.

The at least two cameras can also transmit image data to the computing means, which exclusively include information on contours of the imaged objects and/or contrast information. In particular, such an approach is particularly advantageous if the computing means provides only such functionalities based on the image data, which are not directed to the display of the image representation on the display means. Such information on the contours and/or the contrast information can be used for post-processing.

Thus, the computing means determines the transmitted portions of the image data, and this in dependency on the image representation to be produced, which is to be displayed on the display means. For example, the computing means can determine the mentioned portions, of the image data and/or the quality thereof depending on a representation mode, i.e. depending on which environmental region besides the automobile and/or in which size and/or from which perspective is to be displayed. For example, this can be effected such that a plurality of different regions of the frames in the cameras is predefined and each provided with a specific identification. In this case, the computing means can output control commands to the cameras, which include an identification, by which the selected region is uniquely defined. However, alternatively, this can also be configured such that the computing means each newly identifies the determined image regions, namely with specification of the respective ranges of values for the pixel numbers (for example pixel 400 to pixel 2000).

The computing means can request exclusively that region of a frame - in particular of a sequence of frames -, which corresponds to the displayed image representation. This means that only that region of a frame can be transmitted to the computing means, which is to be displayed on the display means. In this manner, the amount of the transmitted image data is reduced to a minimum.

For reducing the quantity of the image data or for reduction of the resolution of the acquired images, the at least two cameras can use a codec. This codec can then be applied to the image data. It proves particularly advantageous if the image data is subjected to data compression according to the H.264 standard (MPEG-4). Namely, this standard supports the variation of the resolution of the transmitted images using so-called "profiles". With such a codec, therefore, various qualities of the acquired images or of the image regions can be adjusted.

It also proves particularly advantageous if an amount of data of at least one of the cameras transmitted to the computing means is dependent on the amount of data of the respectively other camera. Thus, the resolution of the images transmitted from one camera can also be adjusted considering the resolution of the images of another camera. Correspondingly, a region of a frame of a camera can also be selected considering a selected region of a frame of another camera. In this manner, it is possible to reduce the transmitted amount of data to a minimum altogether and to avoid the transmission of a too great amount of image data. Exactly then, it is possible to provide a common data line for the at least two cameras, through which image data both from a first and from a second and optionally still a further camera can be transmitted.

Preferably, for transmitting the image data between the cameras and the computing means, the LVDS standard is not used as in the prior art, but a data transmission system with a standardized communication protocol is used. This has the advantage that in a standardized data transmission system - for example the Ethernet system - the number of the communication lines can be reduced to a minimum on the one hand, and low-cost lines can be employed on the other hand. In this manner, it is also possible to reduce the bandwidth required for the transmission of the image data with respect to a continuous uninterruptible data steam of an LVDS system. Namely, the image data can for example be compressed and transmitted to the computing means in data packets. Overall, therefore, a cost-reduced and installation space saving camera system is provided.

It proves advantageous if a packet-based data transmission system is used for the data transmission, in which the image data is divided into packets and is transmitted to the computing means in the form of data packets. Therein, the Ethernet system is preferred. The Ethernet system offers the possibility of transmitting the image data through low-cost data lines as well as of reducing the number of the required data lines to a minimum. Namely, in such a packet-based system, plural cameras can be coupled to the computing means through a single common data line or else through very few data lines, and the image data of plural cameras can be transmitted to the computing means through the common data line without increasing the bit error rate.

In the standardized data transmission system, means for performing a flow control of the transmitted image data can be employed. Such a flow control is a mechanism temporarily blocking the data transmission in the data transmission system, namely for a predetermined period of time. The computing means thus obtains the possibility to output a signal to the at least two cameras and thus to inform the cameras that the computing means presently does not want to have sent further packets or that the cameras are to cease the sending of data packets for a predetermined period of time. Thus, a sending pause can be taken. In this manner, it is prevented that the data packets are partially discarded. Thus, by the data flow control, it is achieved that data transmission as continuous as possible without losses can be effected. In particular, in the data transmission system, a flow control according to a standard of the IEEE 1722 family (audio video bridging) is performed for the image data. For example, a data flow control according to the standard IEEE 802.1 QAV can be performed. In particular, the combination of the flow control with a data compression (for example MPEG-4) proves particularly advantageous: In this manner, the required bandwidth for the transmission of the image data can be optimized and the image data can be transmitted in relatively high quality with a low bit error rate and be decoded by the computing means without much effort and without many losses.

The means for performing the data flow control can for example include a router and/or a network bridge, which can control the data flow between the at least one camera and the computing means. However, it can also be provided that the means for performing the data flow control include a camera controlling the own data stream and preferably also a data stream of a further camera. For example, this can be configured such that a camera of the camera system is coupled to the computing means through a further camera such that the image data of the first camera is transmitted to the computing means through the second camera. In this manner, components can be saved, as well as the lines and the valuable installation space.

Thus, the data transmission system can have a communication line common to at least two cameras of the camera system, through which the image data of the at least two cameras can be transmitted to the computing means. This means that the image data of the at least two cameras can be transmitted through a common communication line at least in sections. Such an approach proves particularly advantageous in particular in the mentioned data transmission system with a standardized communication protocol with the data flow control according to an IEEE 1722 AVB standard. In this protocol, namely, even in case of a single data line, it is always ensured that image data critical in time can be transmitted to the computing means without too long latencies affecting the communication between a camera and the computing means. For example, the cameras can be coupled to each other in a serial bus system. Then, one of the cameras can also have the function of performing the data flow control, as already explained. Optionally, an additional network bridge or an additional router for performing the data flow control can here be omitted.

The invention also relates to an automobile having a multi-camera system according to the invention.

A method according to the invention serves for operating a multi-camera system in an automobile. At least two cameras acquire respective image data, which represent a time sequence of frames from an environmental region of the automobile. A common computing means processes the image and produces an image representation from the image data of at least one of the cameras. A display means displays the produced image representation. In dependency on the image representation to be produced, the computing means outputs control commands to the at least two cameras, as a result of which the at least two cameras merely transmit a portion of the acquired image data which is predetermined by the control commands, i.e. only a partial amount of the image data.

The preferred embodiments presented with reference to the multi-camera system according to the invention and the advantages thereof correspondingly apply to the automobile according to the invention as well as to the method according to the invention.

Further features of the invention are apparent from the claims, the figures and the description of figures. All of the features and feature combinations mentioned above in the description as well as the features and feature combinations mentioned in the description of figures and/or shown in the figures alone are usable not only in the respectively specified combination, but also in other combinations or even alone.

Now, the invention is explained in more detail by way of individual preferred embodiments as well as with reference to the attached drawings.

Therein show:
- Fig. 1: in schematic illustration, an automobile with a multi-camera system according to an embodiment of the invention;
- Fig. 2: in schematic illustration, a camera of the multi-camera system according to Fig. 1;
- Fig. 3: an example for a bidirectional communication between a computing means and a camera, wherein a method according to an embodiment of the invention is explained in more detail;
- Fig. 4: in schematic illustration, a frame acquired by a camera with a first (relevant) region as well as a second (irrelevant region); and
- Fig. 5: in schematic illustration, a time sequence of frames recorded by a camera, wherein a region of a frame with a better resolution than a corresponding region of another frame of the same sequence is transmitted to the computing means.

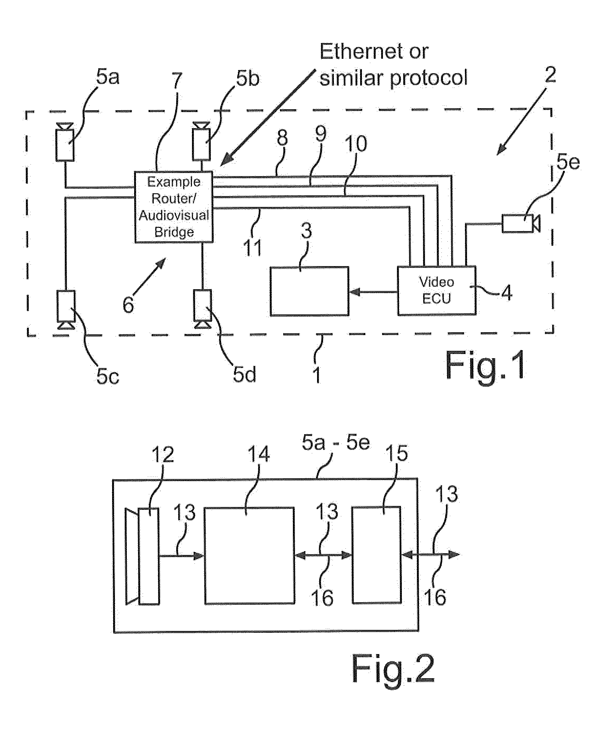

An automobile 1, as it is shown in Fig. 1 in schematic and extremely abstract illustration, is a passenger car in the embodiment. The automobile 1 includes a multi-camera system 2, which comprises the following components: an optical display means 3, a computing means 4 (for example a digital signal processor and/or a microcontroller), as well as five cameras 5a to 5e. The computing means 4 drives the display means 3.

The display means 3 can for example be an LCD display. However, it can also be a projector, with the aid of which images can be projected to a windshield of the automobile 1 - a so-called head-up display.

The cameras 5a to 5e can for example be disposed on an exterior surface of the automobile 1. The number as well as the arrangement of the cameras 5a to 5e is only exemplarily illustrated in Fig. 1; according to the embodiment, the number of the cameras 5a to 5e as well as the arrangement thereof on the automobile 1 can vary. In the embodiment, the cameras 5a to 5e can for example be placed on the following components of the automobile 1: on a front bumper, on a rear bumper, on a left lateral flank, on a left exterior mirror, on a right exterior mirror, on a right lateral flank and the like. In principle, very different types of cameras 5a to 5e can be employed, which serve for detecting the vehicle environment. For example, the cameras 5a to 5e can each have a relatively wide angle of detection. They can be so-called fish-eye cameras. However, the angles of detection of the cameras 5a to 5e can also be smaller. Overall, the angle of detection of the cameras 5a to 5e can for example be in a range of values from 40° to 210°. Cameras 5a to 5e with respectively different angles of detection can also be employed. The cameras 5a to 5e can be placed on the automobile 1 such that they detect the entire environment around the automobile 1, thus a 360° image. The cameras 5a to 5e can for example be CMOS cameras and/or CCD cameras.

The cameras 5a to 5e can each acquire a time sequence of frames from the vehicle environment, i.e. a video. The cameras 5a to 5e can transmit image data to the computing means 4, which represents the recorded sequences of frames. In a sequence of frames, a plurality of frames per second can be recorded.

For transmitting the image data from the cameras 5a to 5e as well as for transmitting control commands from the computing means 4 to the cameras 5a to 5e, the multi-camera system 2 includes a standardized data transmission system 6, in which the image data is transmitted according to a standardized communication protocol. In the embodiment, a packet-based protocol or a packet-based data transmission system 6 is used. For example, an Ethernet system is employed. This means that the image data is divided into data packets and transmitted as such to the computing means 4.

In the embodiment according to Fig. 1, the data transmission system 6 includes a router and/or a network bridge 7, through which the cameras 5a to 5d are coupled to the computing means 4. In contrast, the camera 5e is directly connected to the computing means 4. The router and/or the network bridge 7 also serve for performing a data flow control of the transmitted image data, namely according to an IEEE 1722 AVB standard, in particular the IEEE 802.1 QAV standard. Instead of the separate router and/or the network bridge 7, a camera can also be employed at this place, which then manages the data flow to the computing means 4. This camera then serves as a bridge between other cameras and the computing means 4.

In the embodiment according to Fig. 1, the router and/or the network bridge 7 is connected to the computing means 4 through four data lines or four communication lines 8 to 11. This means that for each of the cameras 5a to 5d, each one communication line 8 to 11 between the router and/or the network bridge and the computing means 4 is provided. At this place, however, only one single data line or communication line 8 can also be employed, which can serve as a common communication line for the cameras 5a to 5d. Thus, the router and/or the network bridge 7 can be connected to the computing means 4 only through one single communication line 8. In this case, the image data of the cameras 5a to 5d is transmitted to the computing means 4 through the common communication line 8.

if a camera is used as the bridge instead of the router and/or the network bridge 7, thus, this camera as well as the cameras 5a to 5d can be coupled in series to each other and thus form a serial communication bus. These cameras 5a to 5d thus can be connected to each other in the form of a chain such that the image data of a camera can be transmitted through other cameras. Thus, a series connection of the cameras 5a to 5d can be provided. Such an approach is possible in the Ethernet system without much effort. In this case, the cameras 5a to 5d can each be provided with two separate ports.

Thus, the computing means 4 receives the image data of the cameras 5a to 5e and can produce an image representation from this image data, which is displayed on the display means 3. Different modes of operation are possible:
- Mode 1: In this mode of operation, the computing means 4 can produce an image representation from the image data of all of the cameras 5a to 5e, which shows the automobile 1 as well as its environment from a bird's eye perspective (bird view mode);
- Mode 2: In this mode of operation, only frames or a video or else a selected region of the frames of the camera 5a are displayed;
- Mode 3: In this mode of operation, only frames or a video or else a selected region of the frames of the camera 5b are displayed;
- Mode 4: In this mode of operation, frames or a video or else certain regions of the frames of the camera 5c can be displayed;
- Mode 5: In this mode of operation, the frames or a video of the camera 5d can be displayed;
- Mode 6: In this mode of operation, the frames or a video of the camera 5e and thus the region behind the automobile 1 can be displayed (rear view mode);
- Mode 7: In this mode of operation, any combination of the frames or the videos of the cameras 5a to 5e can be displayed;
- Mode 8: In this mode of operation, only a very small region of the frames of a single camera 5a to 5e is used for calculating the velocity of the automobile 1 with respect to the earth's surface (terrain assistant mode).

Either it can be switched automatically between the mentioned modes of operation and/or it can be provided that the driver alone can switch between the individual modes. The computing means 4 can for example then automatically switch to the mode 6 if the reverse gear is engaged - then, the camera 5e can acquire the region behind the automobile 1, and the region behind the automobile 1 can be displayed on the display means 3 (rear view).

For different modes of operation or for different image representations on the display means 3, the computing means 4 each requires different portions of the transmitted image data of the cameras 5a to 5e. In this connection different subregions of the frames may be required in different qualities or resolutions; a subregion may for instance be required with high resolution, whilst another subregion is required with a low resolution or can not be required at all. Also, the entire frames may be required with different resolutions at various points in time. For instance in the above-named mode 1 the images of all cameras 5a to 5e are required, but only with a relatively low resolution; this is because these images then are processed to render a combined perspective representation, which shows vehicle 1 from a bird's perspective. If in another mode the displayed image representation is zoomed in or this image representation enlarged, by contrast merely a subregion of the frame of a camera 5a to 5e with a correspondingly high resolution can be transmitted. If, by contrast, a relatively large portion of the surroundings is displayed or the entire frames or relatively large subregions thereof transmitted, the pixel density can be reduced accordingly. In this connection for instance a linear dependency between the size of the transmitted subregion of the frames and the pixel density may be applied; it may namely the relation apply that the larger the transmitted subregion, the lower the density of the pixels. Each camera 5a to 5e can:
- transmit a first region of an acquired frame - in particular of the frames of an entire sequence - with a higher resolution than a second region of the same frame to the computing means 4; this also includes the situation that the second region is not transmitted at all; and/or
- transmit at least one region of a frame from the time sequence of frames with a higher resolution than a corresponding region of a temporally adjacent frame of this sequence to the computing means 4; this also includes that the corresponding region of the adjacent frame is not transmitted at all; and/or
- transmit predetermined color information of at least one acquired frame with a better quality than other color information to the computing means 4; e.g. only the red channel can be transmitted; and/or
- transmit image data to the computing means 4, which exclusively includes information on contours of depicted objects and/or contrast information.

With reference to Fig. 2, a possible construction of a camera 5a to 5e of the multi-camera system 2 is explained in more detail. The cameras 5a to 5e include an imager or image sensor 12 acquiring an environmental region of the automobile 1 and producing image data 13 and outputting it to a controller 14. The imager 12 can have a relatively high resolution of several megapixels. The image data 13 is transmitted with full resolution to the controller 14. The controller 14 receives the image data 13, processes and compresses it and forwards the image data 13 to an Ethernet communication interface 15. Through the Ethernet communication interface 15, the image data 13 are sent to the computing means 4. Through the communication interface 15, the controller 14 of the cameras 5a to 5e can also receive control commands 16 from the computing means 4. The communication interface 15 conditions the image data 13 such that it can be transmitted according to the Ethernet protocol.

Thus, the computing means 4 can transmit control commands 16 to the controller 14 of the respective cameras 5a to 5e, by which the required portions of the image data as well as the required quality of these portions are determined. The controller 14 of the respective camera 5a to 5e selects the required portions from the image data 13 of the imager 12 and transmits these portions to the computing means 4. The controller 14 subjects the selected portions of the image data 13 to data compression, namely according to the standard H.264 (MPEG-4). With such a codec, it is possible using so-called "profiles" to differently compress different portions of the image data 13 and thus to transmit different portions of the image data 13 with different quality or resolution to the computing means 4.

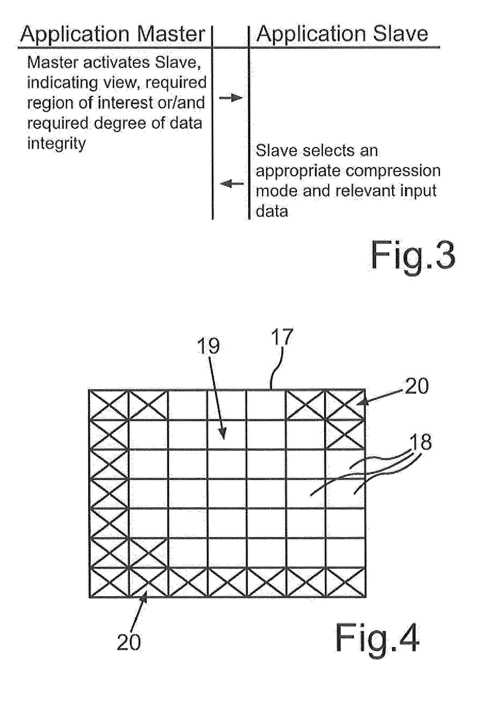

In Fig. 3, a possible progress of a communication between the computing means 4 and the controller 14 of the camera 5a to 5e is illustrated in the form of a table. In this case, the computing means 4 is a master issuing commands to the camera 5a to 5e as a slave. The computing means 4 can activate the camera 5a to 5e, determine the required subregion of the frames as well as define the required resolution of this selected subregion. The camera 5a to 5e then adjusts the required compression mode of the codec as well as selects the relevant image data 13, which is to be compressed and transmitted.

As already explained, each camera 5a to 5e can transmit a first region of the frames with a better resolution than a second region of the frames, namely to the computing means 4. This also includes that the second region is not transmitted at all, but is cut out and discarded. In Fig. 4, an example for a frame 17 of a camera 5a to 5e is illustrated. The frame 17 is divided into a plurality of image blocks 18, which each have a plurality of pixels. Those image blocks 18 not marked with a cross in Fig. 4, thus being empty, constitute a first subregion 19 of the frame 17, which represents a relevant region and thus is transmitted with high quality to the computing means 4. In contrast, the image blocks marked with a cross constitute a second, irrelevant region 20, which is not transmitted. The first, relevant region 19 as well as the second, irrelevant region 20 are predetermined by the computing means 4. Now, several embodiments are provided: The respective camera 5a to 5e can cut out the irrelevant image blocks 18, i.e. the second region 20, and transmit only the relevant region 19. Alternatively, the cameras 5a to 5e can transmit the overall frame 19 to the computing means 4; and the second region 20 can be transmitted with an inferior resolution with respect to the first region 19. As a further alternative, it can be provided that the pixels of the second region 20 are replaced with predetermined pixels, such as with grey pixels. In all cases, the required bandwidth for transmitting the frame 17 is minimum and substantially restricted to the first region 19.

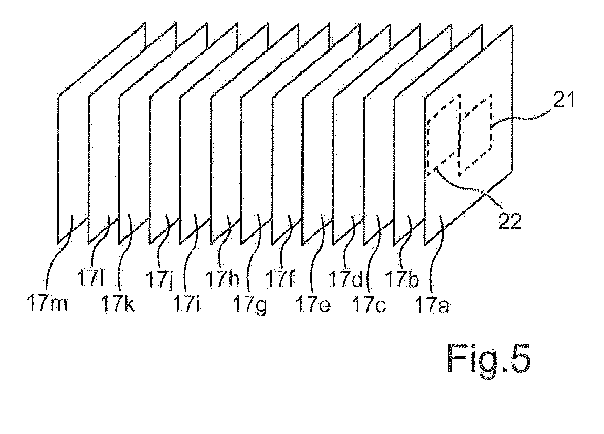

As already explained, portions of the image data different in time domain can also be transmitted with different qualities. In Fig. 5, in schematic and extremely abstract illustration, a sequence of chronologically successively acquired frames 17a to 17m is illustrated, which are consecutively transmitted from the cameras 5a to 5e to the computing means 4 as a video film. At least one region 21 of a frame 17a of this sequence can be transmitted with an improved resolution with respect to a corresponding region 22 of an adjacent frame 17b to the computing means 4. For example, the entire frame 17a can be sent with a better resolution than the adjacent frame 17b. It is also possible that the entire sequence of frames 17a to 17m is sent with a better resolution than a succeeding sequence of frames.

The described approach also includes the case that the region 21 of the frame 17a or else the entire frame 17a is sent to the computing means 4 with a relatively good resolution, while the adjacent frame 17b and optionally also further frames 17c to 17m are not sent at all. Then, on the display means 3, the frame 17a acquired at a certain time or its region 21 can be presented for a longer period of time.

## Claims

1. A multi-camera system (2) for an automobile (1), including:
- at least two cameras (5a to 5e) each for acquiring image data (13) representing a time sequence of frames (17) of an environmental region of the automobile (1),
- a common computing means (4) for processing the image data (13) and for producing an image representation from the image data (13) of at least one of the cameras (5a to 5e), and
- a display means (3) for displaying the produced image representation, **characterized in that**
the computing means (4) is configured, depending on the image representation to be produced, to output control commands (16) to the at least two cameras (5a to 5e), on the basis of which the at least two cameras (5a to 5e) transmit to the computing means (4) only a portion of the acquired image data (13) which is predetermined through the control commands (16).

2. The multi-camera system (2) according to claim 1,
**characterized in that**
the portion of the image data (13) represents a subregion (19) of an acquired frame (17), in particular with a resolution predetermined through the control commands (16).

3. The multi-camera system (2) according to claim 2,
**characterized in that**
the at least two cameras (5a to 5e) are configured to transmit exclusively said subregion (19) of the frame (17) to the computing means (4) while dispensing with the remaining region (20).

4. The multi-camera system (2) according to claim 2,
**characterized in that**
the at least two cameras (5a to 5e) are configured to replace individual pixels, in particular all pixels, of the remaining region (20) of the frame (17) with predetermined pixels, in particular with grey pixels.

5. The multi-camera system according to anyone of the preceding claims,
**characterized in that**
the portion of the image data (13) represents a subregion of a frame (17) or an entire frame (17) with a resolution predetermined through the control commands (16) and lower than a resolution of the cameras (5a to 5e).

6. The multi-camera system according to anyone of the preceding claims,
**characterized in that**
the portion of the image data (13) represents at least one frame (1 7a) or its subregion (21) from the time sequence of frames (17).

7. The multi-camera system (2) according to anyone of the preceding claims,
**characterized in that**
the portion of the image data (13) represents merely a predetermined color information of at least one acquired frame (17) predetermined through the control commands (16).

8. The multi-camera system (2) according to anyone of the preceding claims,
**characterized in that**
the portion of the image data (13) represents merely a contour of at least one depicted object and/or merely contrast information.

9. The multi-camera system (2) according to anyone of the preceding claims,
**characterized in that**
the computing means (4) is adapted to request exclusively that region (19) of a frame with a better resolution with respect to another region (20) from at least one of the cameras (5a to 5e), which corresponds to the image representation to be displayed.

10. The multi-camera system (2) according to anyone of the preceding claims,
**characterized in that**
the at least two cameras (5a to 5e) are adapted to apply a codec, in particular according to the H.264 standard, to the image data (13) for reduction of the quantity of the image data (13).

11. The multi-camera system (2) according to anyone of the preceding claims,
**characterized in that**
an amount of data of at least one camera (5a to 5e) transmitted to the computing means (4) is dependent on the amount of data of at least one other camera (5a to 5e).

12. The multi-camera system (2) according to anyone of the preceding claims,
**characterized by**
a standardized data transmission system (6), in particular a packet-based system, preferably an Ethernet system, through which the at least two cameras (5a to 5e) are coupled to the computing means (4) for transmitting the image data (13) according to a standardized communication protocol.

13. The multi-camera system (2) according to claim 12,
**characterized by**
means (7) for performing a flow control of the image data (13) in the data transmission system (6).

14. The multi-camera system (2) according to anyone of the preceding claims,
**characterized in that**
the multi-camera system (2) comprises a communication line (8) common to the at least two cameras (5a to 5e), through which the image data (13) of the at least two cameras (5a to 5e) can be transmitted to the computing means (4).

15. A method for operating a multi-camera system (5a to 5e) in an automobile (1), in which:
- at least two cameras (5a to 5e) acquire respective image data (13), which represents a time sequence of frames (17) of an environmental region of the automobile (1),
- a common computing means (4) processes the image data (13) and produces an image representation from the image data (13) of at least one of the cameras (5a to 5e), and
- a display means (3) displays the produced image representation,
**characterized in that**
the computing means (4) outputs, depending on the image representation to be produced, control commands (16) to the at least two cameras (5a to 5e), on the basis of which the at least two cameras (5a to 5e) transmit to the computing means (4) only a portion of the acquired image data (13) predetermined through the control commands (16).
